# EUROPEAN PATENT SPECIFICATION

(11) **EP 0 913 055 B1**
(45) Date of publication and mention of the grant of the patent: **31.05.2000**
(21) Application number: 97936129.2
(22) Date of filing: 16.07.1997
(51) Int. Cl.: H04N 5/913

(54) **METHOD OF ADAPTIVE CONTROL OF THE PRESENCE OF A COPY PROTECTION SIGNAL**
VERFAHREN ZUR ANPASSUNGSFÄHIGEN STEUERUNG DER ANWENDUNG EINES KOPIERSCHUTZSIGNALS
SYSTEME ADAPTATIF DE CONTROLE DE LA PRESENCE D'UN SIGNAL DE PROTECTION CONTRE LA COPIE

(30) Priority: 19.07.1996 US 22227 P
(43) Date of publication of application: 06.05.1999
(73) Proprietor: MACROVISION CORPORATION, Sunnyvale, CA 94089 (US)
(72) Inventor: RYAN, John, O., Cupertino, CA 95014 (US)
(74) Representative: Needle, Jacqueline
(86) International application number: US9712698
(87) International publication number: WO9804084

(56) References cited:
- US-A- 4 631 603

## Description

### BACKGROUND OF THE INVENTION

### Field of the Invention

The present invention pertains to a method for processing a video signal and, more particularly, to adaptively sensing certain video signal content in specific areas of a video signal and controlling the presence of selected copy protection signals in response to the certain video signal content.

### Description of the Prior Art

The present invention relates to a method and apparatus for improving playability of certain copy protection techniques that modify a color video signal in such a manner that a conventional television receiver produces a normal color picture from the modified signal, whereas a videotape recording made from the modified signal exhibits very annoying color interference.

Video anticopy processes are well known. An example is U.S. Patent No. 4,631,603 ('603) issued December 23, 1986 to J. Ryan, and incorporated herein by reference. The '603 patent discloses inter alia (see Abstract):

"A video signal is modified so that a television receiver will still provide a normal color picture from the modified video signal while the video tape recording of the modified video signal produces generally unacceptable pictures. The invention relies on the fact that typical video cassette recorder automatic gain control systems cannot distinguish between the normal sync pulses (including equalizing or broad pulses) of a conventional video signal and added pseudo-sync pulses. Pseudo-sync pulses are defined here as any other pulses which extend down to normal sync tip level and which have a duration of at least 0.5 microseconds. A plurality of such pseudo-sync pulses is added to the conventional video signal during the vertical blanking interval, and each of said pseudo-sync pulses is followed by a positive pulse of suitable amplitude and duration. As a result, the automatic gain control system in a videotape recorder will make a false measurement of video level whichcauses an improper recording of the video signal. The result is unacceptable picture quality during playback."

The '603 patent, column 2, beginning at line 5, states that the added pulse pairs (each pair being a negative-going pseudo-sync pulse followed by a positive-going "AGC" pulse) cause an automatic level (gain) control circuit in a videotape recorder to erroneously sense video signal level and produce a gain correction that results in an unacceptable videotape recording.

Another example of a video anticopy process is disclosed in U.S. Patent 4,819,098 ('098) issued on April 4, 1989 to J. Ryan, and incorporated herein by reference. The '098 patent discloses (see Abstract):

"A video signal is modified so that a television/monitor receiver still produces a normal picture from a modified signal, whereas a videotape recording of this signal produces generally unacceptable pictures. Videotape recorders have an automatic gain control circuit which measures the sync pulse level in a video signal and develops a gain correction signal for keeping the video signal level applied to an FM modulator in the video tape recording system at a fixed, predetermined value. A plurality of pulses are added immediately following a respective trailing edge of a normally occurring sync pulse. These added pulses are clustered at the vertical blanking interval of each field to minimize the affect of the same on the viewability of the picture defined by the signal while causing the automatic gain control circuit in a recorder to assess the video level at many times its actual value. The sync pulses themselves can also be at a reduced level, in order to enhance the effectiveness of the process."

Therefore these prior art "basic anticopy processes" cause an abnormally low amplitude video signal to be recorded when a copy is attempted. Some of the effects observed when the illegal copy is replayed are horizontal tearing (positional displacement) and vertical displacement of the picture. Whether this occurs or not is often large dependent on the picture content, i.e., presence of white (light) and black (dark) areas in the picture. Therefore this prior art process, while generally providing excellent copy protection and normal picture quality in most types of television sets, may display a minor amount of hooking or tearing at the top portion of the picture in a very small minority of television sets. Thus there is a need for an adaptive control of the copy protection process which removes the visibility of this minor hooking or tearing of the displayed picture when viewing the copy protection signal.

### SUMMARY OF THE INVENTION

It is an object of the present invention to provide an improved method and apparatus of modifying a video signal so that all conventional television receivers produce a normal color picture from the modified signal, whereas a videotape recording made from the modified signal exhibits annoying interference, thus discouraging or inhibiting videotaping of the signal.

It is a further object of the invention to provide a method and apparatus for detecting the scene content in an upper portion of a video picture, and for adaptively activating or deactivating the insertion of a copy protection signal depending upon preselected conditions which are detected in the scene.

To this end, the invention includes a circuit in a conventional video processing system of, for example, a digital video disk or tape master production facility, which circuit detects picture information, which would be noticeably altered by hooking, in the upper portion of a television picture. Upon detecting a preselected amount of the picture information which would be noticeably altered by hooking, the circuit supplies a signal, for example, a digital bit, which disables the copy protection process so that the copy protection signal is not added to the video signal in the upper portion of the video picture. In the absence of the noticeably alterable picture information in the upper portion of the picture, the copy protection process is enabled. Likewise, the copy protection process is enabled for the remaining majority of the video picture in the usual procedure for applying copy protection.

The invention is set out in the independent claims. Advantageous embodiments are set out in the dependent claims.

These and other features, aspects, and advantages of the present invention will become better understood with regard to the following description and accompanying drawings.

### BRIEF DESCRIPTION OF THE DRAWINGS

FIG. 1 is a graph depicting a display of vertical lines in a television picture, which includes the affects of hooking.

FIG. 2 is a block diagram illustrating a technique and associated circuitry for practicing the method of the present invention.

### DETAILED DESCRIPTION OF THE EMBODIMENTS

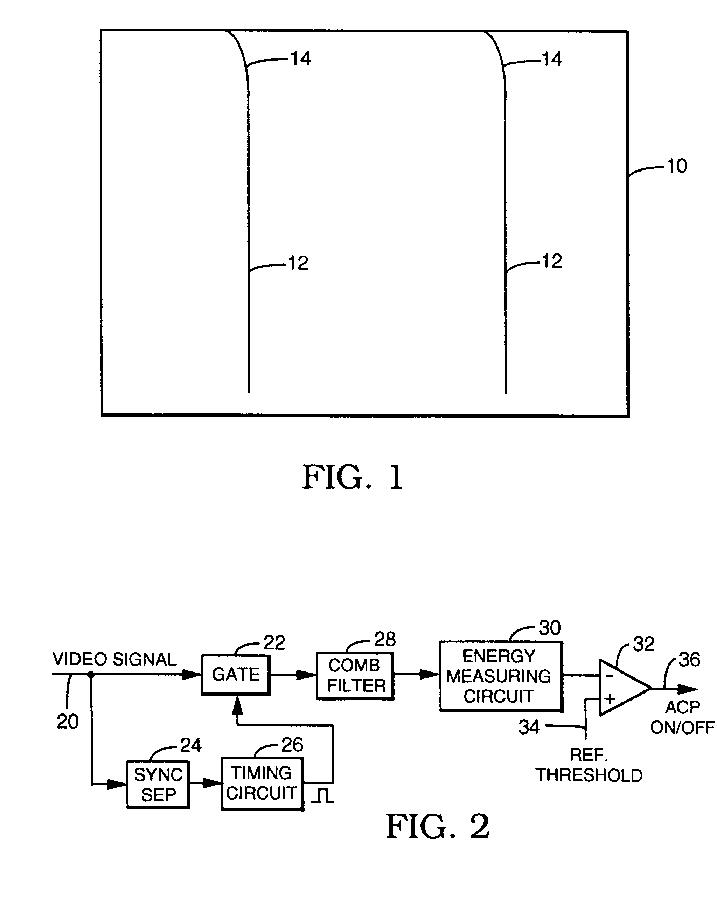

As described above, certain copy protection signals provide very effective copy protection of the recorded video signal, with an overwhelming majority of television receivers displaying no artifacts or adverse affects from the copy protection signal. There is however an occasional small amount of tearing or hooking at the top of a displayed picture on a very small number of television receivers. FIG. 1 depicts the affect of the hooking phenomenon on, for example, vertical lines in a picture displaying such hooking.

The visibility of any hooking depends upon the scene content at the very top of the displayed picture. For example, the first 5% to 10% of the active video picture in an NTSC color television standard. In order to reduce the visibility of hooking on any television receiver while retaining the overall need for copy protected video signals, the basic concepts of the present invention include means for detecting the scene content in the upper portion of the video signal. Such a detection circuit detects picture information which would be noticeably altered by hooking and on a scene by scene basis adaptively activates or deactivates the copy protection signal in the upper portion of the picture where the hooking occurs. The picture content of primary concern is for example the information which would be noticeably altered by hooking as shown in FIG. 1, which depicts a television display 10 with substantially straight edges depicted herein as vertical lines 12 in the display. The hooking or tearing characteristic in the vertical lines 12 is shown at 14. It is to be understood that the lines 12 can be at some angle relative to vertical, for example, within about ± 60° of vertical, as further described below.

Generally the content at the top of a television display contains little detail. A typical example is a sky scene with a flat blue sky with little or no detail. Such a scene would not display the hooking characteristic shown at 14 in FIG. 1. During scenes with little or no detail at the top of the picture, the adaptive control system of the invention activates the copy protection system with no adverse affects on any television receiver. However, if the scene content contains picture information which would be noticeably altered by hooking such as the vertical lines 14, the present adaptive control systemde activates or reduces the effectiveness of the copy protection system, thus reducing or eliminating the hooking or tearing effects.

One technique of the invention for determining whether the copy protection process should be activated or deactivated in the upper portion of the picture, looks for picture information in the top portion of the picture, for example, the first 5% to 10% of the active video image, which if bent as by the hooking process, would be noticeable to a viewer. Thus, the technique and associated apparatus look in the top 20 lines of the active video picture for substantially straight or very slightly curved edges that are within an angle of about ± 60° relative to vertical. If such information is detected, then the copy protection process is deactivated for the corresponding upper portion of the picture.

To this end, FIG. 2 illustrates by way of example only, an embodiment of circuitry for adaptively activating or deactivating an associated copy protection system such as those illustrated in said above mentioned US-patents of previous mention. The technique of FIG. 2 is based on assumptions that substantially straight, or very slightly curved, edges in the upper portion of the picture would be noticeably altered by hooking, which may not be the case in some instances. It follows that the invention may deactivate the copy protection process when such action is unnecessary, which is preferable to the alternative of unwittingly subjecting viewers the hooking or tearing effect. The compromise also lends itself to the fact that the circuitry for practicing this embodiment of the invention is correspondingly simple.

Referring thus to FIG. 2, a video signal is supplied via an input lead 20 to a gate circuit 22 and to a sync separator circuit 24. Typical sync signals are supplied from the circuit 24 to a timing circuit 26 which, in turn, supplies a gate pulse which gates the gate circuit 22. The timing circuit 26 is configured to generate the gate pulse for the first about 5% to 10% of the video picture, for instance, starting at line 21 and ending at line 40 in an NTSC color television standard. The gate pulse opens the gate circuit 22 which supplies the video signal to an analyzer circuit formed, in part, of a comb filter 28 in this particular embodiment of the invention. The comb filter 28 has a transfer characteristic typical of a comb filter but, in this particular embodiment, with the peaks of the comb set at the harmonics of the horizontal line frequency, and the width between each of the peaks equal to about 60 Hertz (Hz). Thus, the configuration of the comb filter 28 based on the premise that any picture information, for example, a substantially straight edge, that repeats itself from one horizontal line to the next vertically, must be at line frequency. Further, if the information is at an angle relative to vertical, such as within the ± 60° of previous mention, it must be slightly less or slightly greater than the line frequency.

The output of the comb filter 28 is supplied to an energy measuring circuit 30 of the analyzer circuit of previous mention which measures the power or energy in the particular band of frequencies. The resulting output of the energy measuring circuit 30 is a DC voltage representative of the energy in a particular band, and is supplied to an inverting input of a comparator 32. The non-inverting input of the comparator is supplied with a selected reference threshold voltage at 34. The output of the comparator 32 on a lead 36 constitutes a control signal, that is, one bit of the digital video stream, which activates or deactivates the copy protection process Thus, if the DC voltage from the circuit 30 exceeds the reference threshold level at 34, the output of the comparator 32 goes low and deactivates the copy protection process. If the DC voltage remains below the reference threshold level, the resulting high logic level on the lead 36 activates the copy protection process. A typical copy protection process which is controlled by the present invention is disclosed in said US-patent 4 631 603 of previous mention. The comparator 32 includes the usual hysteresis to prevent the unstable on/off switching that would occur in the event that the DC voltage from the energy measuring circuit 30 is at the same level as the reference threshold.

The present invention is located in, for example, a digital video disk, video tape, etc., master production facility, where the decision is made to activate or deactivate the copy protection process. The decision is made by setting the previously mentioned bit in the digital stream of the master disk, tape, etc., whereupon the bit activates or deactivates the copy protection process when a subsequent digital disk, tape, etc., is played by a viewer.

It is to be understood that other parameters and/or characteristics of the video image may be used to determine the presence or absence of the hooking process in the upper portion of the image. For example, in an alternative embodiment of the invention, the first 20% of the image, for example the first 50 active video lines thereof, may be analyzed in order to compare the first 20 active video lines with the following 30 active video lines. The comparison determines whether in fact the first 20 lines contain the effects of hooking, since any curved or straight edges in the first 20 lines are continued in the following 30 lines, and the presence of hooking in the first 20 active video lines would be readily noticeable. This technique, though requiring more complex apparatus, provides a relatively precise determination of whether the copy protection process should be activated or deactivated.

## Claims

1. A method of adaptively controlling the presence of copy protection signals within a video signal, comprising the steps of:
detecting the presence of picture information, which would be noticeably altered by hooking, in an upper portion of a display of the video signal;
activating the copy protection signals when the video signal is lacking said picture information in the upper portion of the display; and
deactivating the copy protection signals when the video signal contains said picture information in the upper portion of the display.

2. The method of claim 1 wherein the step of detecting includes:
defining a selected plurality of horizontal television lines corresponding to said upper portion of the display; and
generating a control signal indicative of the presence or absence of said picture information.

3. The method of claim 2 wherein the steps of activating and deactivating are performed in response to application of said control signal.

4. The method of claim 3 wherein the step of detecting further includes:
filtering the video signal to provide a selected band of frequencies related to horizontal line frequency; and
determining if the energy in the selected band of frequencies is less or greater than a preselected threshold to generate therefrom said control signal.

5. The method of claim 4 wherein the step of determining includes:
measuring the energy in the selected band of frequencies to provide a corresponding DC voltage; and
comparing the DC voltage with the preselected threshold to generate the control signal as logic levels indicative of whether the measured energy is less or greater than the threshold.

6. The method of claim 2 wherein said picture information comprises substantially straight edges that are within an angle of about ± 60° of vertical.

7. The method of claim 2 wherein the upper portion of the display comprises generally the first 5% to 10% of the active video image.

8. The method of claim 2 wherein the selected plurality of horizontal television lines comprises about the first 10 to 20 lines of the active video image.

9. Apparatus for adaptively controlling the application of a copy protection process to a video signal, comprising:
means for detecting the presence of picture information, which would be noticeably altered by hooking, in an upper portion of a video signal picture; and
means for deactivating the application of the copy protection process in response to the detected presence of the picture information.

10. The apparatus of claim 9 wherein:
the detecting means further detects the absence of the picture information; and
the deactivating means further includes means for activating the application of the copy protection process in response to the detected absence of the picture information.

11. The apparatus of claim 9 wherein the detecting means includes:
means for defining a selected plurality of lines corresponding to the upper portion of the video signal picture; and
analyzer means responsive to the defining means for generating a control signal indicative of the picture information, which would be noticeably altered by hooking, in the upper portion of the video signal picture.

12. The apparatus of claim 11 wherein the defining means includes:
sync separating means receiving the video signal for providing selected sync signals;
a timing circuit responsive to the sync signals for providing a gate pulse indicative of the plurality of lines; and
gate means responsive to the gate pulse for supplying the video signal during the plurality of lines.

13. The apparatus of claim 11 wherein the analyzer means includes:
filter means receiving the upper portion of the video signal picture for providing a selected band of frequencies related to line frequency; and
means for determining the energy in the selected band of frequencies and for generating a control signal for selectively deactivating the copy protection process.

14. The apparatus of claim 13 wherein the determining means includes:
energy measuring means responsive to said filter means for producing a DC voltage indicative of the energy in the band of frequencies; and
comparator means for generating the control signal in response to the DC voltage being greater than a selected threshold.

15. The apparatus of claim 13 wherein the filter means includes:
a comb filter with the peaks thereof set at the harmonics of the line frequency.

16. A method for adaptively controlling the application of copy protection to a video signal, comprising the steps of:
defining an upper portion of an image of the video signal;
examining the content of the image in said upper portion to determine if any hooking therein would be visually perceptable; and
deactivating the application of copy protection in the event the hooking is visually perceptable.

17. The method of claim 16 wherein the step of defining includes:
counting a selected plurality of lines in the active video image corresponding to the upper portion thereof; and
providing a timing signal indicative of the selected plurality of lines.

18. The method of claim 17 wherein the step of examining includes:
analyzing, in response to the timing signal, the selected plurality of lines to determine if the active video image in the plurality of lines would be noticeably altered by the hooking; and
generating a control signal for deactivating the application of the copy protection if the active video image in the plurality of lines would be noticeably altered by the hooking.

19. The method of claim 17 wherein the plurality of lines comprises about the first 5% to 10% of the lines in the active video image.

20. The method of claim 16 wherein the content of the image in said upper portion comprises substantially straight or very slightly curved edges that are within an angle of about ± 60° of vertical.

## Patentansprüche

1. Verfahren zur adaptiven Steuerung des Vorhandenseins von Kopierschutzsignalen in einem Videosignal, mit den Schritten:
Erfassen des Vorhandenseins von Bildinformationen, die durch Verzerrungen merklich verändert wären, in einem oberen Bereich von einer Anzeige des Videosignals;
Aktivieren des Kopierschutzsignals, wenn diesen Bildinformationen in dem Videosignal in dem oberen Bereich der Anzeige fehlen; und
Deaktivieren des Kopierschutzsignals, wenn diese Bildinformationen in dem Videosignal in dem oberen Bereich der Anzeige enthalten sind.

2. Verfahren nach Anspruch 1, bei dem der Schritt des Erfassens umfaßt:
Definieren einer ausgewählten Vielzahl von horizontalen Fernsehzeilen, die dem oberen Bereich der Anzeige entsprechen; und
Erzeugen eines Steuersignals, das das Vorhandensein oder Nichtvorhandensein der Bildinformationen angibt.

3. Verfahren nach Anspruch 2, bei dem die Schritte des Aktivierens und Deaktivierens in Reaktion auf das Vorliegen des Steuerungssignals durchgeführt werden.

4. Verfahren nach Anspruch 3, bei dem der Schritt des Erfassens außerdem umfaßt:
Filtern des Videosignals, um ein ausgewähltes Frequenzband zu liefern, das mit der horizontalen Zeilenfrequenz in Beziehung steht; und
Bestimmen, ob die Energie in dem ausgewählten Frequenzband kleiner oder größer ist als ein vorgewählter Grenzwert, um daraus das Steuersignal zu erzeugen.

5. verfahren nach Anspruch 4, bei dem der Schritt des Bestimmens umfaßt:
Messen der Energie in dem ausgewählten Frequenzband, um eine entsprechende Gleichspannung zu liefern; und
Vergleichen der Gleichspannung mit dem vorgewählten Grenzwert, um das Steuersignal als Logikpegel zu erzeugen, die angeben, ob die gemessene Energie kleiner oder größer als der Grenzwert ist.

6. Verfahren nach Anspruch 2, bei dem die Bildinformationen im wesentlichen gerade Kanten enthalten, die innerhalb eines Winkels von etwa ± 60° bezüglich der Vertikalen liegen.

7. Verfahren nach Anspruch 2, bei dem der obere Bereich der Anzeige allgemein die ersten 5% bis 10% des aktiven Videobildes umfaßt.

8. Verfahren nach Anspruch 2, bei dem die ausgewählte Vielzahl von horizontalen Fernsehzeilen etwa die ersten 10 bis 20 Zeilen des aktiven Videobildes umfaßt.

9. Vorrichtung zur adaptiven Steuerung der Anwendung eines Kopierschutzverfahrens auf ein Videosignal, mit:
einer Einrichtung zum Erfassen des Vorhandenseins von Bildinformationen, die durch Verzerrungen merklich verändert wären, in einem oberen Bereich von einem Videosignalbild; und
einer Einrichtung zum Deaktivieren der Anwendung des Kopierschutzverfahrens in Reaktion auf das erfaßte Vorhandensein der Bildinformationen.

10. Vorrichtung nach Anspruch 9, bei der:
die Erfassungseinrichtung außerdem das Nichtvorhandensein der Bildinformationen erfaßt; und
die Deaktivierungseinrichtung außerdem eine Einrichtung enthält, um die Anwendung des Kopierschutzverfahrens in Reaktion auf das erfaßte Nichtvorhandensein der Bildinformationen zu aktivieren.

11. Vorrichtung nach Anspruch 9, bei der die Erfassungseinrichtung aufweist:
eine Einrichtung, um eine ausgewählte Vielzahl von Zeilen zu definieren, die dem oberen Bereich des Videosignalbildes entsprechen; und
eine Analysatoreinrichtung, die auf die Einrichtung zum Definieren anspricht, um ein Steuersignal zu erzeugen, das die Bildinformationen angibt, die durch Verzerrungen merklich verändert wären, und zwar in dem oberen Bereich von dem Videosignalbild.

12. Vorrichtung nach Anspruch 11, bei der die Einrichtung zum Definieren aufweist:
eine Synchron-Separator-Einrichtung, die das Videosignal empfängt, um ausgewählte Synchronsignale zur Verfügung zu stellen;
eine Zeitsteuerschaltung, die auf die Synchronsignale anspricht, um einen Gate-Impuls zur verfügung zu stellen, der die Vielzahl von Zeilen angibt; und
eine Gate-Einrichtung, die auf den Gate-Impuls anspricht, um das Videosignal während der Vielzahl von Zeilen zu liefern.

13. Vorrichtung nach Anspruch 11, bei der die Analysatoreinrichtung aufweist:
eine Filtereinrichtung, die den oberen Bereich von dem Videosignalbild empfängt, um ein ausgewähltes Frequenzband zur Verfügung zu stellen, das mit der zeilenfrequenz in Beziehung steht; und
eine Einrichtung, um die Energie in dem ausgewählten Frequenzband zu bestimmen und um ein Steuersignal zu erzeugen, um das Kopierschutzverfahren selektiv zu deaktivieren.

14. Vorrichtung nach Anspruch 13, bei der die Bestimmungseinrichtung aufweist:
eine Energiemeßeinrichtung, die auf die Filtereinrichtung anspricht, um eine Gleichspannung zu erzeugen, die die Energie in dem Frequenzband angibt; und
eine Komparatoreinrichtung, um das Steuersignal in Abhängigkeit davon zu erzeugen, ob die Gleichspannung größer ist als ein ausgewählter Grenzwert.

15. Vorrichtung nach Anspruch 13, bei der Filtereinrichtung aufweist:
ein Comb-Filter, wobei die Spitzenwerte davon auf die Oberwellen der Zeilenfrequenz eingestellt sind.

16. Verfahren zur adaptiven Steuerung der Anwendung eines Kopierschutzes auf ein Videosignal, mit den Schritten:
Definieren eines oberen Bereiches von einem Bild des Videosignals;
Untersuchen des Bildinhaltes in diesem oberen Bereich, um zu bestimmen, ob verzerrungen darin visuell wahrnehmbar wären; und
Deaktivieren der Anwendung des Kopierschutzes in dem Fall, daß die Verzerrungen visuell wahrnehmbar sind.

17. Verfahren nach Anspruch 16, bei dem der Schritt des Definierens umfaßt:
Zählen einer ausgewählten Vielzahl von Zeilen in dem aktiven videobild, die dem oberen Bereich davon entsprechend; und
Bereitstellen eines Zeitsteuersignals, das die ausgewählte Vielzahl von Zeilen angibt.

18. Verfahren nach Anspruch 17, bei dem der Schritt des Untersuchens uJnfaßt:
Analysieren, in Reaktion auf das Zeitsteuersignal, der ausgewählten Vielzahl von Zeilen, um zu bestimmen, ob das aktive Videobild in der Vielzahl von Zeilen durch die verzerrungen merklich verändert wäre; und
Erzeugen eines Steuersignals zum Deaktivieren der Anwendung des Kopierschutzes, wenn das aktive Videobild in der Vielzahl von Zeilen durch die Verzerrungen merklich verändert wäre.

19. Verfahren nach Anspruch 17, bei dem die Vielzahl von Zeilen etwa die ersten 5% bis 10% der Zeilen in dem aktiven Videobild umfaßt.

20. Verfahren nach Anspruch 16, bei dem der Inhalt des Bildes in dem oberen Bereich im wesentlichen gerade oder sehr leichte gekrümmte Kanten enthält, die innerhalb eines Winkels von etwa ± 60° bezüglich der Vertikalen liegen.

## Revendications

1. Procédé de commande adaptative de la présence, à l'intérieur d'un signal vidéo, de signaux de protection contre une copie, comprenant les étapes dans lesquelles :
on détecte la présence d'information d'image, qui serait altérée de manière remarquable par une distorsion, dans une partie supérieure d'un affichage du signal vidéo ;
on active les signaux de protection contre une copie lorsque le signal vidéo ne contient pas ladite information d'image dans la partie supérieure de l'affichage ; et
on désactive les signaux de protection contre une copie lorsque le signal vidéo contient ladite information d'image dans la partie supérieure de l'affichage.

2. Procédé selon la revendication 1, dans lequel l'étape de détection comprend :
la définition d'une pluralité choisie de lignes horizontales de télévision correspondant à ladite partie supérieure de l'affichage; et
la production d'un signal de commande indicatif de la présence, ou de l'absence, de ladite information d'image.

3. Procédé selon la revendication 2, dans lequel on effectue les étapes d'activation et de désactivation en réponse à l'application dudit signal de commande.

4. Procédé selon la revendication 3, dans lequel l'étape de détection comprend en outre :
le filtrage du signal vidéo pour obtenir une bande de fréquences choisie en rapport avec une fréquence de ligne horizontale ; et
le fait de déterminer si l'énergie dans la bande de fréquences choisie est inférieure, ou supérieure, à un seuil préchoisi pour générer à partir de celle-ci ledit signal de commande.

5. Procédé selon la revendication 4, dans lequel l'étape de détermination comprend :
la mesure de l'énergie de la bande de fréquences choisie pour obtenir une tension continue correspondante ; et
la comparaison de la tension continue avec le seuil préchoisi pour produire le signal de commande, en tant que niveaux logiques, indiquant si l'énergie mesurée est inférieure, ou supérieure, au seuil.

6. Procédé selon la revendication 2, dans lequel ladite information d'image comprend des bords sensiblement droits qui sont à l'intérieur d'un angle d'environ ± 60° de la verticale.

7. Procédé selon la revendication 2, dans lequel la partie supérieure de l'affichage comprend globalement les premiers 5 % à 10 % de l'image vidéo active.

8. Procédé selon la revendication 2, dans lequel la pluralité choisie de lignes horizontales de télévision comprend environ les 10 à 20 premières lignes de l'image vidéo active.

9. Appareil de commande adaptative de l'application, à un signal vidéo, d'un traitement de protection contre une copie, comprenant :
un moyen destiné à détecter la présence d'information d'image, qui serait altérée de manière remarquable par une distorsion dans une partie supérieure d'une image de signal vidéo ; et
un moyen destiné à désactiver l'application du traitement de protection de copie en réponse à la présence détectée de l'information d'image.

10. Appareil selon la revendication 9, dans lequel :
le moyen de détection détecte en outre l'absence de l'information d'image ; et
le moyen de désactivation comprend, en outre, un moyen destiné, en réponse à l'absence détectée de l'information d'image, à activer l'application du traitement de protection contre une copie.

11. Appareil selon la revendication 9, dans lequel le moyen de détection comprend :
un moyen destiné à définir une pluralité choisie de lignes correspondant à la partie supérieure de l'image de signal vidéo ; et
un moyen formant analyseur, sensible au moyen de définition, destiné à produire un signal de commande indicatif de l'information d'image, qui serait altérée de manière remarquable par une distorsion du haut de l'image, dans la partie supérieure de l'image de signal vidéo.

12. Appareil selon la revendication 11, dans lequel le moyen de définition comprend :
un moyen de séparation de synchronisation recevant le signal vidéo destiné à fournir des signaux de synchronisation choisis ;
un circuit de cadencement, sensible aux signaux de synchronisation, destiné à fournir une impulsion de porte indicative de la pluralité de lignes ; et
un moyen formant porte, sensible à l'impulsion de porte, destiné à délivrer le signal vidéo au cours de la pluralité de lignes.

13. Appareil selon la revendication 11, dans lequel le moyen formant analyseur comprend :
un moyen formant filtre recevant la partie supérieure de l'image de signal vidéo pour fournir une bande de fréquences choisie en rapport avec la fréquence de ligne ; et
un moyen destiné à déterminer l'énergie dans la bande de fréquences choisie et à produire un signal de commande servant à désactiver, de manière sélective, le traitement de protection contre une copie.

14. Appareil selon la revendication 13, dans lequel le moyen de détermination comprend :
un moyen de mesure d'énergie, sensible audit moyen formant filtre, destiné à produire une tension continue indicative de l'énergie dans la bande de fréquences ; et
un moyen formant comparateur destiné à produire le signal de commande en réponse au fait que la tension continue est supérieure à un seuil choisi.

15. Appareil selon la revendication 13, dans lequel le moyen formant filtre comprend :
un filtre en peigne dont les pics sont fixés aux harmoniques de la fréquence de ligne.

16. Procédé pour commander de manière adaptative l'application, à un signal vidéo, d'une protection contre une copie, comprenant les étapes dans lesquelles :
on définit une partie supérieure d'une image du signal vidéo ;
on examine le contenu de l'image dans ladite partie supérieure pour déterminer si une distorsion quelconque y serait perceptible visuellement ; et
on désactive l'application d'une protection contre une copie dans l'éventualité où la distorsion est perceptible visuellement.

17. Procédé selon la revendication 16, dans lequel l'étape de définition comprend :
le comptage d'une pluralité choisie de lignes de l'image vidéo active correspondant à sa partie supérieure ; et
la délivrance d'un signal de cadencement indicatif de la pluralité choisie de lignes.

18. Procédé selon la revendication 17, dans lequel l'étape d'examen comprend :
l'analyse, en réponse au signal de cadencement, de la pluralité choisie de lignes pour déterminer si l'image vidéo active de la pluralité de lignes serait altérée de manière remarquable par la distorsion; et
la production d'un signal de commande pour désactiver l'application de la protection contre une copie si l'image vidéo active de la pluralité de lignes est altérée de manière remarquable par la distorsion.

19. Procédé selon la revendication 17, dans lequel la pluralité de lignes comprend environ les premiers 5 à 10 % des lignes de l'image vidéo active.

20. Procédé selon la revendication 16, dans lequel le contenu de l'image de ladite partie supérieure comprend des bords sensiblement droits, ou très légèrement incurvés, qui se situent à l'intérieur d'un angle d'environ 60° de la verticale.
